# EUROPEAN PATENT APPLICATION

(11) **EP 3 373 159 A1**
(43) Date of publication of application: **12.09.2018**
(21) Application number: 16877463.6
(22) Date of filing: 26.10.2016
(51) Int. Cl.: G06F 17/30

(54) **DATA ACCESS METHOD, DEVICE AND SYSTEM**

(30) Priority: 25.12.2015 CN 201510998317
(71) Applicant: Huawei Technologies Co., Ltd., Longgang District Shenzhen, Guangdong 518129 (CN)
(72) Inventor: CHEN, Wenjun, Shenzhen, Guangdong 518129 (CN)
(74) Representative: Thun, Clemens
(86) International application number: PCT/CN2016/103414
(87) International publication number: WO 2017/107652

(57) **Abstract**

The present invention discloses a data access method, apparatus, and system, to resolve a technical problem that relatively good storage cannot be implemented in a current database. The method includes: receiving a data access request; determining an access type of a data table that is to be accessed according to the data access request, where the access type of the data table includes a physical data table type and an object data table type that is stored in a database in a form of metadata; and obtaining to-be-accessed data from the to-be-accessed data table according to the determined access type of the data table.

## Description

This application claims priority to Chinese Patent Application No. 201510998317.3, filed with the Chinese Patent Office on December 25, 2015 and entitled "DATA ACCESS METHOD, APPARATUS, AND SYSTEM", which is incorporated herein by reference in its entirety.

### TECHNICAL FIELD

The present invention relates to the field of database technologies, and in particular, to a data access method, apparatus, and system.

### BACKGROUND

A relational database (such as Oracle or mysql) generally stores data in a data table manner. An application (APP) may access a data table in a database by using a database management system (Database Management System, DBMS) interface provided in the database, for example, Java database connectivity (Java DataBase Connectivity, JDBC).

Currently, a database supports approximately two different data storage manners.

A first storage manner is as follows:
Data is stored in a data table of a physical data table type. The data table of the physical data table type means that the data is directly stored in the data table. Each data table of the physical data table type may include an index. When an APP needs to access a data table, the APP may directly access the data table. For example, the APP may obtain an index of the data table when accessing the data table, so as to locate to-be-accessed data according to the index.

The physical data table type is a dedicated data table type, that is, data stored in a data table is relatively closely associated with each other. For example, a payroll of a company may be placed in a data table of the physical data table type. This data storage manner is a manner that is relatively common currently and in which an operation is simple and access performance is relatively good. However, in this data storage manner, if a data table is newly added or a field structure in an existing data table is modified, the APP needs to be modified, for example, execution code in the APP is modified or new code is implanted into the APP, so that the APP learns how to access an updated data table. Apparently, an implementation is relatively complex, and flexibility is relatively poor.

A second storage manner is as follows:
Data is stored in a data table of an object data (Object Data) table type. In this storage manner, a database further stores a metadata table and an index (Index) table. The metadata table stores metadata (Metadata), and the metadata includes definitions of a table structure, a field structure, an index, a relationship between table objects, and the like in an object data table stored in the database. The index table stores a location of a corresponding field, and the like. When performing access, an APP may first obtain a corresponding definition from the metadata table, and then, locate to-be-accessed data by using the index table.

In this access manner, a metadata engine may access the database according to a definition in the metadata table, and the APP does not need to directly access the database. Therefore, the access manner is relatively flexible, and the APP does not need to be modified basically. However, the object data table type is a universal data table type, that is, a data table may store multiple types of mutually uncorrelated data. In simple words, a data table of the object data table type may include data in multiple data tables of the physical data table type. Therefore, currently, an amount of data stored in a data table of the object data table type is generally relatively large. However, when data is queried, retrieval is performed in an entire data table. If an amount of data stored in this type of data table is excessively large, a query speed is affected apparently, resulting in damage of system performance.

It can be learned that, both of the current two storage manners have disadvantages. However, an existing database can support only one storage manner, that is, the database supports either the first storage manner or the second storage manner. Therefore, relatively good storage cannot be implemented.

### SUMMARY

This application provides a data access method, apparatus, and system, to resolve a technical problem that relatively good storage cannot be implemented in a current database.

According to a first aspect, a data access method is provided, including:
receiving a data access request;
determining an access type of a data table that is to be accessed according to the data access request, where the access type of the data table includes a physical data table type and an object data table type that is stored in a database in a form of metadata; and
obtaining to-be-accessed data from the to-be-accessed data table according to the determined access type of the data table.

The database may support two storage manners at the same time, that is, the access type of the data table in the database may include the physical data table type and the object data table type. In this way, different storage manners may be used for different data. On the one hand, flexibility of storage of data with a relatively small data amount may be considered, for example, the data with a relatively small data amount may be stored in a data table of the object data table type. On the other hand, high access performance of data with a relatively large data amount may be also considered, for example, the data with a relatively large data amount may be stored in a data table of the physical data table type. Relatively proper storage manners are separately provided for different data, so that a storage manner in the database is more proper. When data is to be accessed, access to the data can be implemented provided that a type of a data table in which the to-be-accessed data is located is determined according to an access request. An implementation is simple, and is easy to promote and use.

With reference to the first aspect, in a first possible implementation of the first aspect, the determining an access type of a data table that is to be accessed according to the data access request includes:
obtaining information that is carried in the data access request and that is about a first data table and a second data table that are to be accessed; and
determining, according to a stored correspondence between information about a data table and an access type of the data table, that an access type of the first data table is the physical data table type, and that an access type of the second data table is the object data table type.

The correspondence between information about a data table and an access type of the data table may be pre-stored. In this way, after the data access request is received, only information that is carried in the data access request and that is about the to-be-accessed data table needs to be obtained, to determine the access type of the to-be-accessed data table. In this way, data tables with different access types may be simply distinguished, to avoid confusion, and ensure that the data tables with the different access types can be accessed in a correct manner subsequently.

With reference to the first possible implementation of the first aspect, in a second possible implementation of the first aspect, the obtaining to-be-accessed data from the to-be-accessed data table according to the determined access type of the data table includes:
obtaining, from the first data table according to a first access condition that is carried in the data access request and that is for the first data table, M pieces of first data that meets the first access condition;
obtaining, from the second data table according to a second access condition that is carried in the data access request and that is for the second data table, N pieces of second data that meets the second access condition, where both M and N are positive integers; and
in a process of obtaining the N pieces of second data, each time a piece of second data is obtained, performing a join operation on the obtained second data and the M pieces of first data, and obtaining the to-be-accessed data after the join operation is performed N times.

If data tables with different access types are accessed, a user may intend to obtain data generated after content in two data tables is joined. Therefore, a join operation may be performed on the data obtained in the first data table and the data obtained in the second data table. In this way, relatively regular data may be presented for the user, and the user does not need to autonomously perform combination. In addition, in the process of obtaining the second data, each time a piece of second data is obtained, a join operation may be performed on the obtained second data and the M pieces of first data, so that the join operation is performed in time, and this helps improve efficiency. With reference to the second possible implementation of the first aspect, in a third possible implementation of the first aspect, the performing a join operation on the obtained second data and the M pieces of first data includes:
obtaining a join condition carried in the data access request, where the join condition is used to perform a join operation on the M pieces of first data and the N pieces of second data;
determining whether the obtained second data and at least one of the M pieces of first data meet the join condition; and
if the obtained second data and the at least one piece of first data meet the join condition, obtaining a group of joined data that includes the obtained second data and the at least one piece of first data.

A manner of performing a join operation is provided. The join operation is performed according to the join condition carried in the data access request, so that a requirement of the user is met, and an operation process is also relatively quick.

With reference to any one of the first aspect, or the first to the third possible implementations of the first aspect, in a fourth possible implementation of the first aspect, the method further includes:
outputting first prompt information if an amount of data included in a third data table stored in the database is greater than a preset threshold, and a type of the third data table is the object data table type, where the first prompt information is used to instruct to convert the type of the third data table to the physical data table type.

The preset threshold may be autonomously set by a data access apparatus, for example, may be set by a system according to learning experience, or may be set by the user. If an amount of data included in a data table (such as the third data table) of the object data table type is greater than the preset threshold, a relatively long time needs to be consumed when the third data table is accessed, and system performance may be affected. Therefore, if the amount of data included in the third data table is greater than the preset threshold, the data access apparatus may output the first prompt information. In this way, the user may select whether to convert the access type of the third data table to the physical data table type, so that data access performance is improved.

With reference to any one of the first aspect, or the first to the fourth possible implementations of the first aspect, in a fifth possible implementation of the first aspect, the method further includes:
receiving a request message used to request to establish a fourth data table, where the request message carries an amount of data included in the fourth data table; and
outputting second prompt information if the amount of data included in the fourth data table is greater than the preset threshold, where the second prompt information is used to instruct to establish the fourth data table in the physical data table type; or outputting second prompt information if the amount of data included in the fourth data table is less than or equal to the preset threshold, where the second prompt information is used to instruct to establish the fourth data table in the object data table type.

The data access apparatus may output a recommendation (that is, the second prompt information) according to the amount of data included in the to-be-established fourth data table. If the data amount is greater than the preset threshold, it is recommended that the fourth data table is established in the physical data table type, to improve data access performance. If the data amount is less than or equal to the preset threshold, it is recommended that the fourth data table is established in the object data table type, to improve data access flexibility. In this way, different types of data tables may be established according to different data amounts, so that the storage manner in the database is more proper, and data access performance is improved as much as possible.

According to a second aspect, a data access apparatus is provided, including:
a memory, configured to store an instruction;
a receiver, configured to receive a data access request; and a processor, configured to execute the instruction to: determine an access type of a data table that is to be accessed according to the data access request, where the access type of the data table includes a physical data table type and an object data table type that is stored in a database in a form of metadata; and obtain to-be-accessed data from the to-be-accessed data table according to the determined access type of the data table.

With reference to the second aspect, in a first possible implementation of the second aspect, the processor is configured to:
obtain information that is carried in the data access request and that is about a first data table and a second data table that are to be accessed; and
determine, according to a stored correspondence between information about a data table and an access type of the data table, that an access type of the first data table is the physical data table type, and that an access type of the second data table is the object data table type.

With reference to the first possible implementation of the second aspect, in a second possible implementation of the second aspect, the processor is configured to:
obtain, from the first data table according to a first access condition that is carried in the data access request and that is for the first data table, M pieces of first data that meets the first access condition;
obtain, from the second data table according to a second access condition that is carried in the data access request and that is for the second data table, N pieces of second data that meets the second access condition, where both M and N are positive integers; and
in a process of obtaining the N pieces of second data, each time a piece of second data is obtained, perform a join operation on the obtained second data and the M pieces of first data, and obtain the to-be-accessed data after the join operation is performed N times.

With reference to the second possible implementation of the second aspect, in a third possible implementation of the second aspect, the processor is configured to:
obtain a join condition carried in the data access request, where the join condition is used to perform a join operation on the M pieces of first data and the N pieces of second data;
determine whether the obtained second data and at least one of the M pieces of first data meet the join condition; and
if the obtained second data and the at least one piece of first data meet the join condition, obtain a group of joined data that includes the obtained second data and the at least one piece of first data.

With reference to any one of the second aspect, or the first to the third possible implementations of the second aspect, in a fourth possible implementation of the second aspect, the apparatus further includes a transmitter, and the processor is further configured to:
output, by using the transmitter, first prompt information if an amount of data stored in a third data table stored in the database is greater than a preset threshold, and a type of the third data table is the object data table type, where the first prompt information is used to instruct to convert the type of the third data table to the physical data table type.

With reference to any one of the second aspect, or the first to the fourth possible implementations of the second aspect, in a fifth possible implementation of the second aspect, the apparatus further includes the transmitter;
the receiver is further configured to receive a request message used to request to establish a fourth data table, where the request message carries an amount of data included in the fourth data table; and
the processor is further configured to: output, by using the transmitter, second prompt information if the amount of data included in the fourth data table is greater than the preset threshold, where the second prompt information is used to instruct to establish the fourth data table in the physical data table type; or output, by using the transmitter, second prompt information if the amount of data included in the fourth data table is less than or equal to the preset threshold, where the second prompt information is used to instruct to establish the fourth data table in the object data table type.

According to a third aspect, a data access system is provided, including:
a database, used to store a data table, where an access type of the data table includes a physical data table type and an object data table type that is stored in the database in a form of metadata; and
the data access apparatus according to any one of the second aspect, or the first to the fifth possible implementations of the second aspect, configured to access the database according to a received data access request, to obtain to-be-accessed data from a to-be-accessed data table.

According to a fourth aspect, another data access apparatus is provided, and the data access apparatus includes a module configured to perform the method in the first aspect.

The database in the embodiments of the present invention supports both of the foregoing two data storage manners. In this way, different storage manners may be selected for different data. When data is to be accessed, only a type of a data table in which the to-be-accessed data is located needs to be determined according to an access request, to learn how to access the data. An implementation is simple, and is easy to promote and use.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1A and FIG. 1B are two schematic diagrams of a first storage manner in a database;
FIG. 2 is a schematic diagram of a second storage manner in a database;
FIG. 3 is a schematic diagram of a storage manner in a database according to an embodiment of the present invention;
FIG. 4A and FIG. 4B are schematic structural diagrams of a data access apparatus according to an embodiment of the present invention;
FIG. 5 is a schematic structural diagram of a data access system according to an embodiment of the present invention;
FIG. 6 is a flowchart of a data access method according to an embodiment of the present invention; and
FIG. 7 is a structural block diagram of a data access apparatus according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

Two data storage manners in a database are briefly described first.

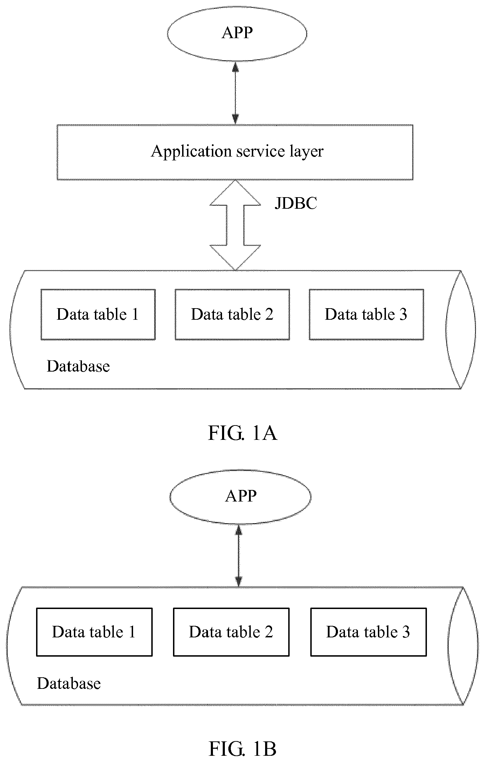

In a first storage manner, data is stored in a data table of a physical data table type. When establishing the data table of the physical data table type, a user directly establishes the data table in the database by using an APP. For example, the user establishes several data tables of the physical data table type in the database. Referring to FIG. 1A, the data tables are a data table 1, a data table 2, and a data table 3. Certainly, after a data table is established, an index corresponding to the data table further needs to be established, and the index is generally stored together with the data table. In addition, after a data table is established, a table structure, a field, and the like in the data table further need to be defined. These definitions may be placed in Extensible Markup Language (XML) information of the data table, and the XML information may be also stored together with the data table.

For example, if the APP needs to access the data table 1, the APP may directly access the data table 1 by using a JDBC interface at an application service layer. For example, the APP may first obtain an index of the data table 1 when accessing the data table 1, so as to locate to-be-accessed data according to the index. Alternatively, an APP may directly access the database without using an application service layer. For example, referring to FIG. 1B, the user establishes several data tables of the physical data table type in the database, and the data tables are a data table 1, a data table 2, and a data table 3. The user may directly access, by operating the APP, these data tables without using the application service layer.

The APP and the application service layer may be considered as two function modules, the two function modules are generally implemented in a software manner, and the two function modules may be located in a same device, or may be located in different devices. The JDBC interface is generally an interface provided at the application service layer, and is used by the APP to access the database.

In addition, the database may be also considered as a function module, and may be generally implemented by using a storage component in a device. The three function modules, that is, the APP, the application service layer, and the database, may be located in a same device, or may be separately located in different devices. Alternatively, any two of the function modules may be located in a same device.

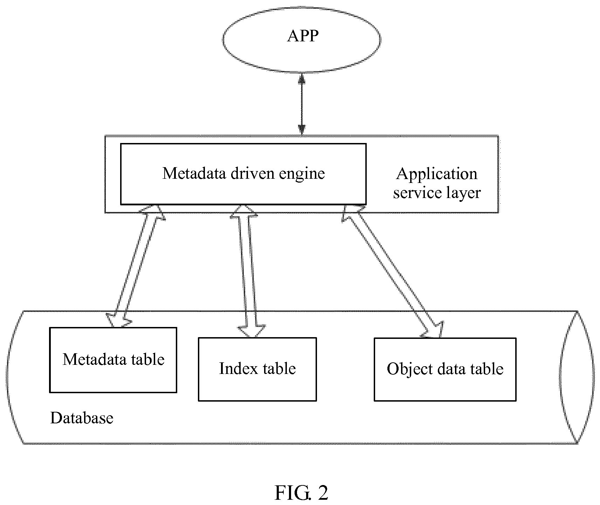

In a second storage manner, data is stored in a data table of an object data table type. When an object data table is established, a metadata table first needs to be established. For example, a system may provide an interface that is specially used to establish the metadata table, and a user may directly establish the metadata table in the interface. The user may select submitting content after completing of inputting the content. For example, referring to FIG. 2, a metadata driven engine located at an application service layer may establish the metadata table in the database according to content input by the user, and generate metadata in the metadata table according to the content input by the user. For example, the metadata may include definitions of a table structure, a field structure, an index, a relationship between table objects, and the like in an object data table that is about to be established. The metadata driven engine may further establish a corresponding object data table in the database, to store data. In addition, the metadata driven engine may further establish, in the database, an index table used to query data in the object data table.

An object data table may store all types of mutually uncorrelated data, and therefore, only one object data table needs to be established in the database. Certainly, a solution in which multiple object data tables are established also falls within the protection scope of the embodiments of the present invention.

If a metadata table is already established in the database, the metadata driven engine no longer needs to establish a new metadata table, but only needs to directly generate the metadata according to the content submitted by the user, and place the metadata in the generated metadata table. If an object data table is already established in the database, the metadata driven engine does not need to establish a new object data table, but only needs to place to-be-stored data in the established object data table. If an index table is already established in the database, the metadata driven engine no longer needs to establish a new index table, but only needs to directly add an index of new data to the established index table.

For example, if an APP needs to access the object data table, the APP may obtain the definition of the table structure or the like in the object data table from the metadata table by using the metadata driven engine, and then, perform query by using the metadata driven engine according to the index table, to obtain data in the object data table.

The database in the embodiments of the present invention supports both of the foregoing two data storage manners. In this way, different storage manners may be selected for different data. When data is to be accessed, only a type of a data table in which the to-be-accessed data is located needs to be determined according to an access request, to learn how to access the data. An implementation is simple, and is easy to promote and use.

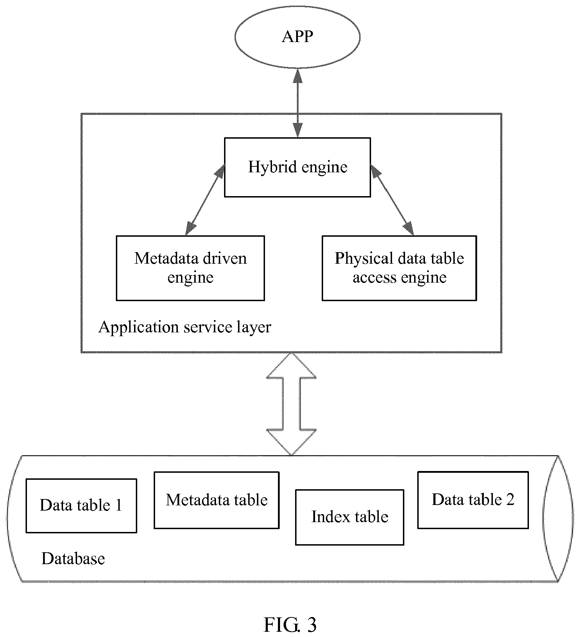

Referring to FIG. 3, FIG. 3 is a schematic diagram of a storage manner of a database according to an embodiment of the present invention.

In FIG. 3, a data table 1 is a data table of a physical data table type, and a data table 2 is a data table of an object data table type. In addition, the database further stores a metadata table and an index table that are corresponding to the data table 2. An index of the data table 1 is stored together with the data table 1, and is not drawn in FIG. 3. In addition, one data table of the physical data table type is used as an example in FIG. 3. In actual application, the database may store multiple data tables of the physical data table type.

In addition, a hybrid engine that is also located at an application service layer is provided in this embodiment of the present invention. The hybrid engine can separately communicate with a metadata driven engine configured to access an object data table and a physical data table access engine configured to access a physical data table. The hybrid engine may receive an access request input by using an APP. After determining a specific type of a data table in which to-be-accessed data is located, the hybrid engine may invoke a corresponding engine (the metadata driven engine or the physical data table access engine) to respond to the access request. After obtaining the to-be-accessed data, the metadata driven engine or the physical data table access engine may directly feed back the to-be-accessed data to the APP without using the hybrid engine. Alternatively, the metadata driven engine or the physical data table access engine may feed back the to-be-accessed data to the hybrid engine, and the hybrid engine feeds back the to-be-accessed data to the APP. Therefore, access to different types of data tables is implemented.

Optionally, the metadata driven engine and the physical data table access engine may be located in the hybrid engine, that is, the hybrid engine may include the metadata driven engine and the physical data table access engine. Certainly, the hybrid engine may further include another function module. Alternatively, the hybrid engine, the metadata driven engine, and the physical data table access engine may be three independent modules, and the hybrid engine can separately communicate with the metadata driven engine and the physical data table access engine (this is used as an example in FIG. 3).

The physical data table access engine provided in this embodiment of the present invention is configured to access a data table of the physical data table type. The physical data table access engine may be a JDBC interface, or may be another interface or engine configured to access the data table of the physical data table type. A technical solution provided in an embodiment of the present invention is described below with reference to the accompanying drawings.

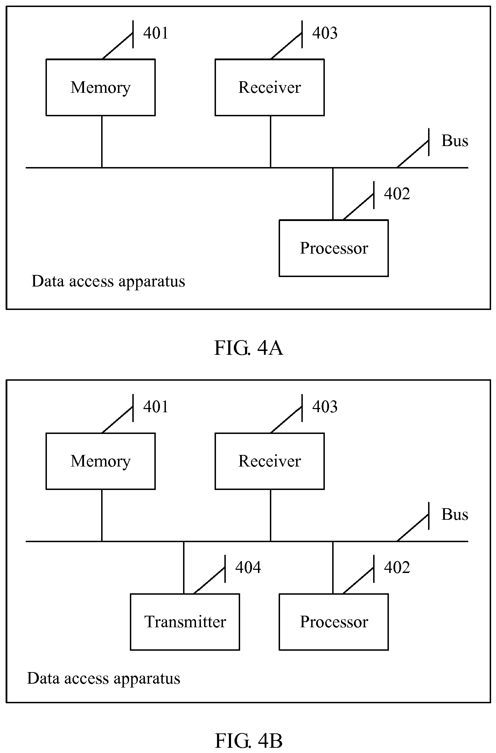

Referring to FIG. 4A, an embodiment of the present invention provides a data access apparatus, and the data access apparatus may include a memory 401, a processor 402, and a receiver 403.

The processor 402 may be a central processing unit (CPU) or an application-specific integrated circuit (Application Specific Integrated Circuit, ASIC), or may be one or more integrated circuits configured to control program execution, or may be a hardware circuit developed by using a field programmable gate array (Field Programmable Gate Array, FPGA), or may be a baseband chip.

There may be one or more memories 401. The memory 401 may include a read-only memory (Read Only Memory, ROM), a random access memory (Random Access Memory, RAM), and a magnetic disk memory.

The receiver 403 may be configured to communicate with an external device. For example, the receiver 403 may communicate with an APP.

Optionally, referring to FIG. 4B, the apparatus may further include a transmitter 404 that may be configured to communicate with an external device. For example, the transmitter 404 may also communicate with the APP.

The transmitter 404 and the receiver 403 may be a same entity module, for example, may be an entity module that can implement a receiving and transmitting function. For example, the entity module may be referred to as a transceiver. Alternatively, the transmitter 404 and the receiver 403 may be independent entity modules.

The memory 401, the transmitter 404, and the receiver 403 may be connected to the processor 402 by using a bus (this is used as an example in FIG. 4A and FIG. 4B), or may be separately connected to the processor 402 by using dedicated connection cables.

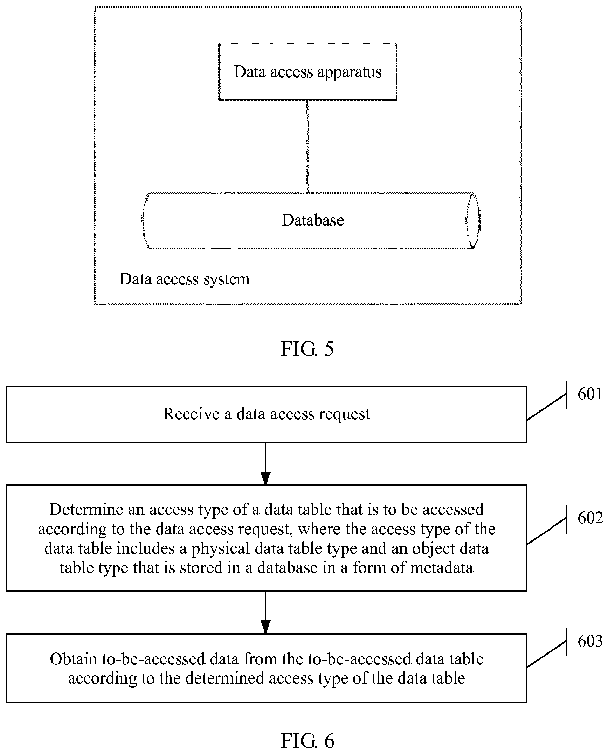

Code corresponding to a method shown below is built into a chip by designing programming for the processor 402, so that when running, the chip can perform the method shown in FIG. 6 below. How to design programming for the processor 402 is a technology that is well known to a person skilled in the art, and details are not described herein.

The data access apparatus may implement a function of the hybrid engine in FIG. 3. The data access apparatus may be implemented in a software manner, for example, may be a software program that is built into a device. Alternatively, the data access apparatus may be implemented in a hardware manner, for example, may be a hardware module that is newly added in a device. Alternatively, the data access apparatus may be implemented by using an original hardware module in a device. For example, the processor 402 may be implemented by using a data processing system in the device, the memory 401 may be implemented by using a storage component in the device, or the memory 401 may be implemented by using an internal cache of the data processing system in the device, and the transmitter 404 and the receiver 403 may be implemented by using a data transceiver system in the device.

Referring to FIG. 5, based on a same invention conception, an embodiment of the present invention further provides a data access system. The data access system may include a database, and may further include the data access apparatus shown in FIG. 4A or FIG. 4B. The database and the data access apparatus in the system may be located in a same device (this is used as an example in FIG. 5), for example, may be located in a same server. Alternatively, the database and the data access apparatus may be located in different devices, for example, may be located in different servers, or may be located in other different types of devices.

The following describes a method provided in an embodiment of the present invention.

Referring to FIG. 6, an embodiment of the present invention provides a data access method. The method may be performed by the data access apparatus described above. A procedure of the method is described as follows:
Step 601: Receive a data access request.
Step 602: Determine an access type of a data table that is to be accessed according to the data access request, where the access type of the data table includes a physical data table type and an object data table type that is stored in a database in a form of metadata.
Step 603: Obtain to-be-accessed data from the to-be-accessed data table according to the determined access type of the data table.

A receiver 403 may receive a data access request input by an APP. For example, the data access request input by the APP may be a structured query language (Structured Query Language, SQL) statement. Optionally, the data access request may carry information about a to-be-accessed data table. For example, the information about the data table may include an access type, a name, an identifier (identity, ID), or the like of the data table.

A processor 402 may determine the access type of the data table that is to be accessed according to the data access request. Optionally, if the data access request directly carries the access type of the to-be-accessed data table, the processor 402 may directly determine the access type of the to-be-accessed data table according to the data access request. If the data access request carries other information about the data table, for example, carries the ID of the data table or the name of the data table, the processor 402 further needs to determine the access type of the to-be-accessed data table. Therefore, a memory 401 may pre-store a correspondence between information about a data table and an access type of the data table. In this way, after receiving the data access request, the processor 402 may obtain the information that is carried in the data access request and that is about the data table, and then, determine the type of the to-be-accessed data table according to the stored correspondence between information about a data table and an access type of the data table. For example, if the memory 401 pre-stores a correspondence between an ID of a data table and an access type of the data table, the data access request sent by the APP needs to carry the ID of the data table. In this way, after receiving the data access request, the processor 402 may obtain the ID that is carried in the data access request and that is of the data table, and then, determine the access type of the to-be-accessed data table according to the stored correspondence between an ID of a data table and an access type of the data table.

The following describes the data storage and access method in this embodiment of the present invention by using two examples.

### Example 1:

For example, two data tables need to be added to the database, are a sum bill table (for example, referred to as BILL_SUM) and a detail bill table (for example, referred to as BILL_DETAIL), and are used to record a bill generated by a client.

For example, a data scale of the BILL_SUM is 60 million pieces. For a table structure of the BILL_SUM, refer to Table 1.

**Table 1**

| **Field name** | **Code** | **Data type** | **Length** | **Mandatory field** |
|---|---|---|---|---|
| Account identifier | ACCT_ID | NUMBER (16) | 16 | TRUE |
| City code | EPARCHY_CODE | CHAR (4) | 4 | FALSE |
| Sum account item identifier | SUM_ITEM_CODE | NUMBER (5) | 5 | TRUE |
| Actual fee | FEE | NUMBER (12) | 12 | FALSE |
| Discount fee | ADJUST_BEFORE | NUMBER (12) | 12 | FALSE |
| Bill identifier | STATUS | VARCHAR 2 (2) | 2 | FALSE |
| Bill cycle | BILL_CYCLE | VARCHAR 2 (6) | 6 | TRUE |

For example, a data scale of the BILL_DETAIL is 10 times that of the BILL_SUM, and there is approximately 600 million pieces of data. For a table structure of the BILL_DETAIL, refer to Table 2.

**Table 2**

| **Field name** | **Code** | **Data type** | **Length** | **Mandatory field** |
|---|---|---|---|---|
| Account identifier | ACCT_ID | NUMBER (16) | 16 | TRUE |
| User identifier | USER_ID | NUMBER (16) | 16 | TRUE |
| City code | EPARCHY_CODE | CHAR (4) | 4 | FALSE |
| Detail account item identifier | DETAIL_ITEM_CODE | NUMBER (5) | 5 | TRUE |
| Initial fee | INIT_FEE | NUMBER (12) | 12 | TRUE |
| Actual fee | FEE | NUMBER (12) | 12 | TRUE |
| Account discount fee | A_DISCNT | NUMBER (12) | 12 | FALSE |
| Adjustment before bill run | ADJUST_BEFORE | NUMBER (12) | 12 | FALSE |
| Account adjustment before bill run | ACCT_ADJUST_BEFORE | NUMBER (12) | 12 | FALSE |
| Bill identifier | STATUS | VARCHAR 2 (2) | 2 | FALSE |
| Bill cycle | BILL_CYCLE | VARCHAR 2 (6) | 6 | TRUE |

A data table of the physical data table type is relatively flexible, and an access speed is relatively high. However, the APP needs to be modified frequently, and this is relatively troublesome. When a data table of the object data table type is accessed, the APP does not need to be modified basically. However, because the data table of the object data table type includes excessive data, an access speed is lower than that for the data table of the physical data table type. Therefore, in this embodiment of the present invention, different storage manners may be used for different data. Data with a relatively small data amount may be stored in the data table of the object data table type. Because the data amount is relatively small, an access speed is not extremely low. In addition, an advantage that the APP does not need to be modified for the data table of the object data table type may be utilized as much as possible. For data with a relatively large data amount, an access speed may be affected if the data table of the object data table type is used for storage, and therefore, it may be considered that the data table of the physical data table type is used for storage, so as to improve the access speed as much as possible, and avoid damage of system performance. Optionally, a threshold may be preset, and the preset threshold is stored in the memory 401. If an amount of data that needs to be stored is less than or equal to the preset threshold, the data may be stored in the data table of the object data table type. If an amount of data that needs to be stored is greater than the preset threshold, the data may be stored in the data table of the physical data table type. The preset threshold may be autonomously set by the processor 402. For example, the processor 402 may set the preset threshold according to storage experience. Alternatively, the preset threshold may be set by a user.

For example, in Example 1, the preset threshold is 80 million. Apparently, a type of the BILL_SUM may be the object data table type, and a type of the BILL_DETAIL may be the physical data table type.

For example, the memory 401 may store a correspondence between other information about a data table and an access type of the data table (for example, the correspondence is stored in a data table that is referred to as an object type table). For example, in Example 1, a correspondence between a name of a data table and an access type of the data table is stored. For details, refer to Table 3.

**Table 3**

| **Name of a data table** | **Access type** | **Data scale** | **Data table structure information** |
|---|---|---|---|
| BILL_SUM | Metadata | 60 million | Metadata |
| BILL_DETAIL | Physical data table type | 600 million | XML table structure information |

In addition to the correspondence between a name of a data table and an access type of the data table, the object type table may further store information such as data scales and data table structure information of different data tables. Still referring to Table 3, the object type table needs only to be used by the processor 402 to determine the access type of the data table requested to be accessed by using the data access request. Other information stored in the object type table is not limited in this embodiment of the present invention.

When the APP needs to access data in the BILL_DETAIL or the BILL_SUM, the APP may send a data access request to the data access apparatus. The data access request may be a universal SQL access request. In Example 1, the data access request may carry the name of the to-be-accessed data table. After the receiver 403 receives the access request, the processor 402 may determine the access type of the to-be-accessed data table according to the object type table.

If the name that is carried in the data access request and that is of the data table is the BILL_DETAIL, the processor 402 determines that the access type of the to-be-accessed data table is the physical data table type, and the processor 402 may invoke a physical data table access engine. The physical data table access engine obtains the data access request to obtain information such as a table structure and a field of the data table that is requested to be accessed by using the data access request, determines definitions of the obtained information such as the table structure and the field according to XML information of the BILL_DETAIL, and then, accesses required data in the BILL_DETAIL by using an index of the BILL_DETAIL. If the data access request does not carry the information such as the table structure and the field, the physical data table access engine may consider that data corresponding to all table structures, fields, and the like needs to be accessed. The physical data table access engine may reassemble the data access request according to the XML information of the BILL_DETAIL, add information such as all table structures and fields of the BILL_DETAIL to the data access request, and then, access the required data in the BILL_DETAIL by using the index of the BILL_DETAIL. Then, the physical data table access engine may directly feed back the accessed data to the APP. Alternatively, the physical data table access engine may feed back the accessed data to the data access apparatus, and the processor 402 feeds back the accessed data to the APP by using a transmitter 404.

If the name that is carried in the data access request and that is of the data table is the BILL_SUM, the processor 402 determines that the access type of the to-be-accessed data table is the object data table type, and the processor 402 may invoke a metadata driven engine. The metadata driven engine obtains the data access request to obtain information such as a table structure and a field of the data table that is requested to be accessed by using the data access request, determines definitions of the obtained information such as the table structure and the field according to a metadata table, and then, accesses required data in the BILL_SUM by using an index table. Then, the metadata driven engine may directly feed back the accessed data to the APP. Alternatively, the metadata driven engine may feed back the accessed data to the data access apparatus, and the processor 402 feeds back the accessed data to the APP by using a transmitter 404.

### Example 2:

For example, a bill type table (for example, referred to as BILL_TYPE) and a detail bill table (for example, referred to as BILL_DETAIL) need to be newly added to the database. For a BILL_DETAIL establishment manner, refer to a description in Example 1.

For example, an amount of data in the BILL_TYPE is not large, and is less than a preset threshold (for example, the preset threshold is 80 million). Therefore, it may be considered that a data table of the object data table type is used for storage. Because the database has stored a metadata table, a data table of the object data table type, and an index table, metadata of the BILL_TYPE may be directly placed in the metadata table, the data in the BILL_TYPE may be directly placed in the object data table, and index information of the data in the BILL_TYPE may be directly placed in the index table. For example, for a table structure of the BILL_TYPE, refer to Table 4.

**Table 4**

| **Field name** | **Code** | **Data type** | **Length** | **Mandatory field** |
|---|---|---|---|---|
| Account item identifier | BILL_ITEM_CODE | NUMBER (5) | 5 | TRUE |
| Account item type | ITEM_TYPE | NUMBER (5) | 5 | TRUE |
| Account item name | BILL_ITEM_NAME | VARCHAR 2 (32) | 32 | FALSE |

For an object type table stored in the memory 401, refer to Table 5.

**Table 5**

| **Name of a data table** | **Access type** | **Data scale** | **Data table structure information** |
|---|---|---|---|
| BILL_TYPE | Metadata | one thousand | Metadata |
| BILL_DETAIL | Physical data table type | 600 million | XML table structure information |

When the APP needs to access data in the BILL_DETAIL or the BILL_TYPE, the APP may send a data access request to the data access apparatus. The data access request may be a universal SQL access request. The data access request may carry the name of the to-be-accessed data table. After the receiver 403 receives the access request, the processor 402 determines the access type of the to-be-accessed data table according to the object type table. For example, the data access request sent by the APP is an SQL query request. For example, the SQL query request is: select A.*, B. BILL_ITEM_NAME from BILL_DETAIL A, Bill_TYPE B WHERE A. ACCT_ID=11332 AND A.BILL_ITEM_CODE=B.BILL_ITEM_CODE(+). Apparently, data in data tables of two different access types needs to be queried according to this SQL query request. Optionally, a join (join) operation may be performed on the data in the two data tables, and a result of the join operation is used as a data access result that is fed back to the APP. When a join operation is performed, a primary table and a secondary table in to-be-accessed data tables may be first determined according to a data access request. For example, the processor 402 may determine, according to the foregoing data access request, that the BILL_DETAIL is a primary table, and the BILL_TYPE is a secondary table, and the processor 402 may perform a join operation on data obtained from the primary table and each piece of data obtained from the secondary table. The following describes a join process.

The processor 402 invokes the physical data table access engine, so as to obtain to-be-accessed data in the BILL_DETAIL by using the physical data table access engine, for example, obtain M pieces of first data. The processor 402 may first store the M pieces of first data in a cache, and the cache may be provided by the memory 401, or may be provided by the processor 402. The processor 402 further needs to invoke the metadata driven engine, so as to obtain to-be-accessed data in the BILL_TYPE by using the metadata driven engine. If the processor 402 directly obtains all to-be-accessed data in the BILL_TYPE at a time by using the metadata driven engine (for example, the to-be-accessed data obtained from the BILL_TYPE is referred to as second data, and N pieces of second data may be obtained in total), and then, performs a join operation, it requires that the M pieces of first data and the N pieces of second data are stored in the cache together. This needs to occupy relatively large space, resulting in resource waste, and the data access apparatus also needs to have relatively good performance. Therefore, optionally, after obtaining the M pieces of first data, the processor 402 may invoke the metadata driven engine to sequentially obtain the second data from the BILL_TYPE. For example, each time a piece of second data is obtained, the processor 402 may join the obtained second data to the M pieces of first data according to a join condition, to check whether the obtained second data can be joined to at least one of the M pieces of first data. If the obtained second data can be joined to the at least one piece of first data, that is, the obtained second data and the at least one piece of first data can meet the join condition, the processor 402 obtains a group of joined data. This group of joined data includes the obtained second data and the at least one piece of first data, and this group of joined data is data in the to-be-accessed data. That is, the processor 402 needs to perform a join operation N times. After obtaining the last piece of second data (that is, an N^{th} piece of second data) from the BILL_TYPE, the processor 402 performs a join operation for an N^{th} time. After the N^{th} time of performing a join operation is completed, the processor 402 may obtain the to-be-accessed data. The to-be-accessed data may include K groups of joined data, and K is an integer that is less than or equal to N and that is greater than or equal to 0. The K groups of joined data are the to-be-accessed data.

For a manner of obtaining the first data and the second data from the data table, refer to the description in the foregoing embodiment, and details are not described again. The join condition may be carried in the data access request. The processor 402 may obtain the join condition by parsing the data access request, so as to join the M pieces of first data and the N pieces of second data.

The following further describes the join operation process by using an example.

For example, the data access request is: select a.telnumber, a.name, a.productid, b.product_name from USER_ORDER A, PRODUCT B where A.telnumber="13912345678", b.product type="GoTone", A.productid=B.productid. Table A (that is, USER_ORDER) includes 100 million pieces of data, and an access type of Table A is the physical data table type. Table B (that is, PRODUCT) includes 5000 pieces of data, and an access type of Table B is the object data table type. For example, in Table A, there are 200 pieces of data that meets the condition: A.telnumber="13912345678". For example, in Table B, there are 300 pieces of data that meets the condition: product_type="GoTone". The processor 402 may first determine a primary and secondary relationship between the data tables according to the data access request. For example, a rule may be that a data table with a larger data amount is used as a primary table, and the other data table is used as a secondary table, that is, Table A is used as a primary table, and Table B is used as a secondary table. After determining the primary and secondary relationship, the processor 402 first determines an obtaining condition of data in the primary table according to the data access request, that is, determines an access condition that is carried in the data access request and that is for the primary table. For example, it can be learned according to the foregoing data access request that, A.telnumber="13912345678" is the access condition for the primary table. The processor 402 invokes the physical data table access engine to extract, from the primary table, data that meets the access condition. Then, the processor 402 determines an obtaining condition of data in the secondary table according to the data access request, that is, determines an access condition that is carried in the data access request and that is for the secondary table. For example, it can be learned according to the foregoing data access request that, product_type="GoTone" is the access condition for the secondary table. Optionally, each time a piece of data is extracted from the secondary table, a join operation may be performed on the extracted data and data in the primary table. A join condition may be carried in the data access request. For example, in the data access request in this example, A.productid=B.productid is the join condition. A piece of data obtained in the secondary table may have an association relationship with at least one piece of data in the primary table, and then, the piece of data in the secondary table and the at least one piece of data obtained in the primary table may be used as a group of joined data. Alternatively, some data in the secondary table may have no association relationship with any data obtained in the primary table, that is, neither the some data in the secondary table nor any data obtained in the primary table meets the join condition, and then, data that is obtained in the secondary table and that cannot be joined to any data obtained in the primary table may not be data that is to be accessed by the APP. This part of data may be discarded, and this helps save storage space. Optionally, after all joined data is obtained, only the obtained joined data may be used as the to-be-accessed data for feedback. Both the data that is obtained in the secondary table and that cannot be joined to any data obtained in the primary table and data that is obtained in the primary table and that cannot be joined to any data obtained in the secondary table can be discarded. Alternatively, after all joined data is obtained, not only the obtained joined data may be used as the to-be-accessed data for feedback, but also data that is obtained in the primary table and that cannot be joined to any data obtained in the secondary table may be used as the to-be-accessed data for feedback. In this way, data obtained by a user is more complete.

After obtaining the to-be-accessed data, the processor 402 may feed back the to-be-accessed data to the APP by using the transmitter 404. Alternatively, after obtaining the to-be-accessed data, the processor 402 may sort the to-be-accessed data (for example, in Example 2, sorting may be performed according to a bill type), and then, feed back the to-be-accessed data to the APP by using the transmitter 404. Separate access and join access are described by using the foregoing several examples, that is, technical solutions provided in this embodiment of the present invention can provide different access results according to different data access requests, so as to meet different requirements.

Optionally, the processor 402 may further scan all types of data tables stored in the database. For example, the processor 402 may scan the data tables regularly or periodically, or may scan the data tables when being triggered by a user. For example, if the processor 402 determines, by means of scanning, that an amount of data included in a third data table stored in the database is greater than a preset threshold, the processor 402 may determine an access type of the third data table. For example, the access type of the third data table is the object data table type. To improve access performance of the database, the processor 402 may send a message to the APP. The APP may output first prompt information to the user, and the first prompt information may be used to instruct to convert the access type of the third data table to the physical data table type. After receiving the first prompt information, if the user accepts this recommendation, the data included in the third data table may be stored again in the physical data table type.

Optionally, when the user needs to establish a data table, the user may send a request message to the data access apparatus by using the APP. For example, if the user needs to establish a fourth data table, the user sends a request message to the data access apparatus by using the APP, and the request message may carry an amount of data included in the fourth data table. The receiver 403 receives the request message sent by the APP, and the processor 402 may determine whether the amount of data in the fourth data table is greater than the preset threshold stored in the memory 401, so as to provide a storage instruction for the fourth data table. For example, if the amount of data included in the fourth data table is greater than the preset threshold, the processor 402 may instruct to establish the fourth data table in a storage manner of the physical data table type. If the amount of data included in the fourth data table is less than or equal to the preset threshold, the processor 402 may instruct to establish the fourth data table in a storage manner of the object data table type. The transmitter 404 may send the instruction of the processor 402 to the APP, and the APP may output second prompt information. For example, if the amount of data included in the fourth data table is greater than the preset threshold, the second prompt information may be used to instruct to establish the fourth data table in the storage manner of the physical data table type. If the amount of data included in the fourth data table is less than or equal to the preset threshold, the second prompt information may be used to instruct to establish the fourth data table in the storage manner of the object data table type. Subsequently, the user may establish the fourth data table according to the second prompt information.

In this way, different types of data tables may be established according to different data amounts, so that a storage manner in the database is more proper, and access performance is improved as much as possible.

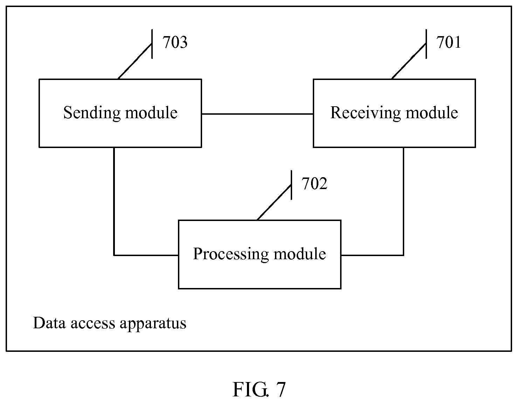

Referring to FIG. 7, based on a same invention conception, an embodiment of the present invention further provides a data access apparatus. The apparatus may include a receiving module 701 and a processing module 702. Optionally, the apparatus may further include a sending module 703.

In actual application, the apparatus may be implemented in a software manner, or may be implemented in a hardware manner. For example, an entity device corresponding to the processing module 702 in the apparatus may be the processor 402 in FIG. 4A and FIG. 4B, an entity device corresponding to the receiving module 701 may be the receiver 403 in FIG. 4A and FIG. 4B, and an entity device corresponding to the sending module 703 may be the transmitter 404 in FIG. 4B.

The apparatus may be configured to perform the method described in FIG. 6. Therefore, for a function and the like implemented by each module in the apparatus, refer to the description in the method, and details are not described again.

In this embodiment of the present invention, a database may support two storage manners at the same time, that is, an access type of a data table in the database may include a physical data table type and an object data table type. In this way, different storage manners may be used for different data. On the one hand, flexibility of storage of data with a relatively small data amount may be considered, for example, the data with a relatively small data amount may be stored in a data table of the object data table type. On the other hand, high access performance of data with a relatively large data amount may be also considered, for example, the data with a relatively large data amount may be stored in a data table of the physical data table type. Relatively proper storage manners are separately provided for different data, so that a storage manner in the database is more proper. When data is to be accessed, access to the data can be implemented provided that a type of a data table in which the to-be-accessed data is located is determined according to an access request. An implementation is simple, and is easy to promote and use.

In the present invention, it should be understood that the disclosed apparatus, system, and method may be implemented in other manners. For example, the described apparatus embodiment is merely an example. For example, the module or module division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected according to actual needs to achieve the embodiments of the present invention.

All function units in the embodiments of the present invention may be integrated into a processing unit, or all the units may be independent physical modules.

When the integrated unit is implemented in the form of a software functional unit and sold or used as an independent product, the integrated unit may be stored in a computer-readable storage medium. Based on such an understanding, all or some technical solutions of the present invention may be implemented in a form of a software product. The software product is stored in a storage medium and includes several instructions for instructing a computer device (which may be a personal computer, a server, or a network device) or a processor (processor) to perform all or some of the steps of the methods described in the embodiments of the present invention. The foregoing storage medium includes: any medium that can store program code, such as a Universal Serial Bus flash drive (Universal Serial Bus flash drive), a removable hard disk, a ROM, a RAM, a magnetic disk, or an optical disc. The foregoing embodiments are merely used to describe the technical solutions of the present invention. The foregoing embodiments are merely intended to help understand the method of the embodiments of the present invention, and shall not be construed as a limitation on the embodiments of the present invention. Any variation or replacement readily figured out by a person skilled in the art shall fall within the protection scope of the embodiments of the present invention.

## Claims

1. A data access method, comprising:
receiving a data access request;
determining an access type of a data table that is to be accessed according to the data access request, wherein the access type of the data table comprises a physical data table type and an object data table type that is stored in a database in a form of metadata; and
obtaining to-be-accessed data from the to-be-accessed data table according to the determined access type of the data table.

2. The method according to claim 1, wherein the determining an access type of a data table that is to be accessed according to the data access request comprises:
obtaining information that is carried in the data access request and that is about a first data table and a second data table that are to be accessed; and
determining, according to a stored correspondence between information about a data table and an access type of the data table, that an access type of the first data table is the physical data table type, and that an access type of the second data table is the object data table type.

3. The method according to claim 2, wherein the obtaining to-be-accessed data from the to-be-accessed data table according to the determined access type of the data table comprises:
obtaining, from the first data table according to a first access condition that is carried in the data access request and that is for the first data table, M pieces of first data that meets the first access condition;
obtaining, from the second data table according to a second access condition that is carried in the data access request and that is for the second data table, N pieces of second data that meets the second access condition, wherein both M and N are positive integers; and
in a process of obtaining the N pieces of second data, each time a piece of second data is obtained, performing a join operation on the obtained second data and the M pieces of first data, and obtaining the to-be-accessed data after the join operation is performed N times.

4. The method according to claim 3, wherein the performing a join operation on the obtained second data and the M pieces of first data comprises:
obtaining a join condition carried in the data access request, wherein the join condition is used to perform a join operation on the M pieces of first data and the N pieces of second data;
determining whether the obtained second data and at least one of the M pieces of first data meet the join condition; and
if the obtained second data and the at least one piece of first data meet the join condition, obtaining a group of joined data that comprises the obtained second data and the at least one piece of first data.

5. The method according to any one of claims 1 to 4, wherein the method further comprises:
outputting first prompt information if an amount of data comprised in a third data table stored in the database is greater than a preset threshold, and a type of the third data table is the object data table type, wherein the first prompt information is used to instruct to convert the type of the third data table to the physical data table type.

6. The method according to any one of claims 1 to 5, wherein the method further comprises:
receiving a request message used to request to establish a fourth data table, wherein the request message carries an amount of data comprised in the fourth data table; and
outputting second prompt information if the amount of data comprised in the fourth data table is greater than the preset threshold, wherein the second prompt information is used to instruct to establish the fourth data table in the physical data table type; or outputting second prompt information if the amount of data comprised in the fourth data table is less than or equal to the preset threshold, wherein the second prompt information is used to instruct to establish the fourth data table in the object data table type.

7. A data access apparatus, comprising:
a receiving module, configured to receive a data access request; and
a processing module, configured to determine an access type of a data table that is to be accessed according to the data access request, wherein the access type of the data table comprises a physical data table type and an object data table type that is stored in a database in a form of metadata; wherein
the processing module is further configured to obtain to-be-accessed data from the to-be-accessed data table according to the determined access type of the data table.

8. The apparatus according to claim 7, wherein the processing module is configured to:
obtain information that is carried in the data access request and that is about a first data table and a second data table that are to be accessed; and
determine, according to a stored correspondence between information about a data table and an access type of the data table, that an access type of the first data table is the physical data table type, and that an access type of the second data table is the object data table type.

9. The apparatus according to claim 8, wherein the processing module is configured to:
obtain, from the first data table according to a first access condition that is carried in the data access request and that is for the first data table, M pieces of first data that meets the first access condition;
obtain, from the second data table according to a second access condition that is carried in the data access request and that is for the second data table, N pieces of second data that meets the second access condition, wherein both M and N are positive integers; and
in a process of obtaining the N pieces of second data, each time a piece of second data is obtained, perform a join operation on the obtained second data and the M pieces of first data, and obtain the to-be-accessed data after the join operation is performed N times.

10. The apparatus according to claim 9, wherein the processing module is configured to:
obtain a join condition carried in the data access request, wherein the join condition is used to perform a join operation on the M pieces of first data and the N pieces of second data;
determine whether the obtained second data and at least one of the M pieces of first data meet the join condition; and
if the obtained second data and the at least one piece of first data meet the join condition, obtain a group of joined data that comprises the obtained second data and the at least one piece of first data.

11. The apparatus according to any one of claims 7 to 10, wherein the apparatus further comprises a sending module;
the processing module is further configured to determine that an amount of data comprised in a third data table stored in the database is greater than a preset threshold, and that a type of the third data table is the object data table type; and
the sending module is configured to output first prompt information, wherein the first prompt information is used to instruct to convert the type of the third data table to the physical data table type.

12. The apparatus according to any one of claims 7 to 11, wherein the apparatus further comprises the sending module;
the receiving module is further configured to receive a request message used to request to establish a fourth data table, wherein the request message carries an amount of data comprised in the fourth data table;
the processing module is further configured to: determine that the amount of data comprised in the fourth data table is greater than the preset threshold; or determine that the amount of data comprised in the fourth data table is less than or equal to the preset threshold; and
the sending module is configured to: output second prompt information if the processing module determines that the amount of data comprised in the fourth data table is greater than the preset threshold, wherein the second prompt information is used to instruct to establish the fourth data table in the physical data table type; or output second prompt information if the processing module determines that the amount of data comprised in the fourth data table is less than or equal to the preset threshold, wherein the second prompt information is used to instruct to establish the fourth data table in the object data table type.

13. A data access apparatus, comprising:
a memory, configured to store an instruction;
a receiver, configured to receive a data access request; and
a processor, configured to execute the instruction to: determine an access type of a data table that is to be accessed according to the data access request, wherein the access type of the data table comprises a physical data table type and an object data table type that is stored in a database in a form of metadata; and obtain to-be-accessed data from the to-be-accessed data table according to the determined access type of the data table.

14. The apparatus according to claim 13, wherein the processor is configured to:
obtain information that is carried in the data access request and that is about a first data table and a second data table that are to be accessed; and
determine, according to a stored correspondence between information about a data table and an access type of the data table, that an access type of the first data table is the physical data table type, and that an access type of the second data table is the object data table type.

15. The apparatus according to claim 14, wherein the processor is configured to:
obtain, from the first data table according to a first access condition that is carried in the data access request and that is for the first data table, M pieces of first data that meets the first access condition;
obtain, from the second data table according to a second access condition that is carried in the data access request and that is for the second data table, N pieces of second data that meets the second access condition, wherein both M and N are positive integers; and
in a process of obtaining the N pieces of second data, each time a piece of second data is obtained, perform a join operation on the obtained second data and the M pieces of first data, and obtain the to-be-accessed data after the join operation is performed N times.

16. The apparatus according to claim 15, wherein the processor is configured to:
obtain a join condition carried in the data access request, wherein the join condition is used to perform a join operation on the M pieces of first data and the N pieces of second data;
determine whether the obtained second data and at least one of the M pieces of first data meet the join condition; and
if the obtained second data and the at least one piece of first data meet the join condition, obtain a group of joined data that comprises the obtained second data and the at least one piece of first data.

17. The apparatus according to any one of claims 13 to 16, wherein the apparatus further comprises a transmitter, and the processor is further configured to:
output, by using the transmitter, first prompt information if an amount of data stored in a third data table stored in the database is greater than a preset threshold, and a type of the third data table is the object data table type, wherein the first prompt information is used to instruct to convert the type of the third data table to the physical data table type.

18. The apparatus according to any one of claims 13 to 17, wherein the apparatus further comprises the transmitter;
the receiver is further configured to receive a request message used to request to establish a fourth data table, wherein the request message carries an amount of data comprised in the fourth data table; and
the processor is further configured to: output, by using the transmitter, second prompt information if the amount of data comprised in the fourth data table is greater than the preset threshold, wherein the second prompt information is used to instruct to establish the fourth data table in the physical data table type; or output, by using the transmitter, second prompt information if the amount of data comprised in the fourth data table is less than or equal to the preset threshold, wherein the second prompt information is used to instruct to establish the fourth data table in the object data table type.

19. A data access system, comprising:
a database, used to store a data table, wherein an access type of the data table comprises a physical data table type and an object data table type that is stored in the database in a form of metadata; and
the data access apparatus according to any one of claims 13 to 18, configured to access the database according to a received data access request, to obtain to-be-accessed data from a to-be-accessed data table.
